# EUROPEAN PATENT SPECIFICATION

(11) **EP 2 905 509 B1**
(45) Date of publication and mention of the grant of the patent: **21.09.2016**
(21) Application number: 14178538.6
(22) Date of filing: 25.07.2014
(51) Int. Cl.: F16H 35/00, F01L 1/352, F16H 49/00

(54) **Axially compact electrically driven camshaft phaser**
Axialkompakter, elektrisch angetriebener Nockenwellenversteller
Déphaseur d'arbre à cames entraîné électriquement axialement compact

(30) Priority: 01.08.2013 US 201313956404
(43) Date of publication of application: 12.08.2015
(73) Proprietor: Delphi Technologies, Inc., Troy MI 48007 (US)
(72) Inventor: KIMUS, Pierre, 66717 Attert (BE); DAVID, Pascal, 06235 Beidweiler (LU); BOURNICHE, Eric, 54720 Lexy (LU)
(74) Representative: Delphi France SAS

(56) References cited:
- EP-A1- 2 282 021
- EP-A1- 2 574 745
- EP-A2- 1 715 143
- WO-A1-95/00748
- US-A1- 2012 024 247

## Description

### TECHNICAL FIELD OF INVENTION

The present invention relates to a camshaft phaser which uses an electric motor to vary the phase relationship between a crankshaft and a camshaft of an internal combustion engine; more particularly, to such a camshaft phaser which comprises a harmonic gear drive unit; and even more particularly to such a camshaft phaser which is axially compact.

### BACKGROUND OF INVENTION

Camshaft phasers for varying the timing of combustion valves in internal combustion engines are well known. A first element, known generally as a sprocket element, is driven by a chain, belt, or gearing from the crankshaft of the internal combustion engine. A second element, known generally as a camshaft plate, is mounted to the end of a camshaft of the internal combustion engine. A common type of camshaft phaser used by motor vehicle manufactures is known as a vane-type camshaft phaser. US Patent No. 7,421,989 shows a typical vane-type camshaft phaser which generally comprises a plurality of outwardly-extending vanes on a rotor interspersed with a plurality of inwardly-extending lobes on a stator, forming alternating advance and retard chambers between the vanes and lobes. Engine oil is supplied via a multiport oil control valve, in accordance with an engine control module, to either the advance or retard chambers, to change the angular position of the rotor relative to the stator, and consequently the angular position of the camshaft relative to the crankshaft, as required to meet current or anticipated engine operating conditions.

While vane-type camshaft phasers are effective and relatively inexpensive, they do suffer from drawbacks such as slow operation at low engine speeds due to low oil pressure, slow operation at low engine temperatures due to high oil viscosity, increased oil pump capacity requirement for the oil pump used to lubricate the internal combustion because the same pump is used to actuate the vane-type camshaft phaser, and the total amount of phase authority provided by vane-type camshaft phasers is limited by the amount of space between adjacent vanes and lobes and may not be sufficient to provide the desired amount of phase authority. For at least these reasons, the automotive industry is developing electrically driven camshaft phasers.

One type of electrically driven camshaft phaser being developed uses a harmonic gear drive unit, actuated by an electric motor, to change the angular position of the camshaft relative to the crankshaft. One example of such a camshaft phaser is shown in United States Patent Application Publication No. US 2012/0312258 A1 to Kimus et al. While the camshaft phaser of Kimus et al. may be effective, some vehicle platforms using such a camshaft phaser may require a more axially compact camshaft phaser in order to conform to space availability.

What is needed is an electrically driven camshaft phaser which minimizes or eliminates one of more of the shortcomings as set forth above. EP 1715143 disloses a cam phaser of the prior art.

### SUMMARY OF THE INVENTION

Briefly described, a camshaft phaser is provided for controllably varying the phase relationship between a crankshaft and a camshaft of an internal combustion engine. The camshaft phaser includes a housing having a bore with an open end and extending along a longitudinal axis. The camshaft phaser also includes a harmonic gear drive unit having an outer first spline, an outer second spline which is axially adjacent to the outer first spline and disposed within said housing, a flexspline disposed radially within the outer first spline and the outer second spline, a wave generator disposed radially within the flexspline, and a rotational actuator connectable to the wave generator such that rotation of the rotational actuator causes relative rotation between the outer first spline and the outer second spline. The outer first spline is fixed to the housing in order to prevent relative rotation therebetween and serves to close the first open end of the housing. The camshaft phaser is consequently more axially compact since the housing does not need to be extended to close the open end of the housing. The camshaft phaser may further comprise an output hub rotatably disposed coaxially within the housing axially adjacent to the harmonic gear drive unit and attachable to the camshaft and fixed to the outer second spline in order to prevent relative rotation therebetween. The output hub may be radially supported by the bore, thereby defining a journal bearing interface radially between the output hub and the bore. The output hub may include a bearing mounted coaxially therewith which radially supports the wave generator. The wave generator may include a snap ring groove with a snap ring extending radially outward from the snap ring groove and wherein the snap ring may be located axially between the output hub and the bearing. The bearing may be located axially between the harmonic gear drive unit and the output hub. The outer first spline may include a slot and wherein the output hub may include a stop member extending axially into the slot, thereby limiting the amount of relative rotation between the housing and the output hub. The slot may be arc-shaped and may have a first arc length. The stop member may be arc-shaped and may have a second arc length that is less than the first arc length. The outer first spline may include an outer first spline snap ring groove and an outer first spline snap ring extending radially inward from the outer first spline snap ring groove to retain the flexspline. The outer first spline includes an outer first spline snap ring groove and an outer first spline snap ring extending radially inward from the outer first spline snap ring groove to retain the flexspline axially between the output hub and the outer first spline snap ring. The outer first spline may be located outside the housing. The outer first spline axially may abut the housing.

### BRIEF DESCRIPTION OF DRAWINGS

This invention will be further described with reference to the accompanying drawings in which:
Fig. 1 is an exploded isometric view of a camshaft phaser in accordance with the present invention;
Fig. 2 is an axial cross-sectional view of the camshaft phaser in accordance with the present invention; and
Fig. 3 is an isometric view of the camshaft phaser in accordance with the present invention shown without an electric motor for actuating the camshaft phaser.

### DETAILED DESCRIPTION OF INVENTION

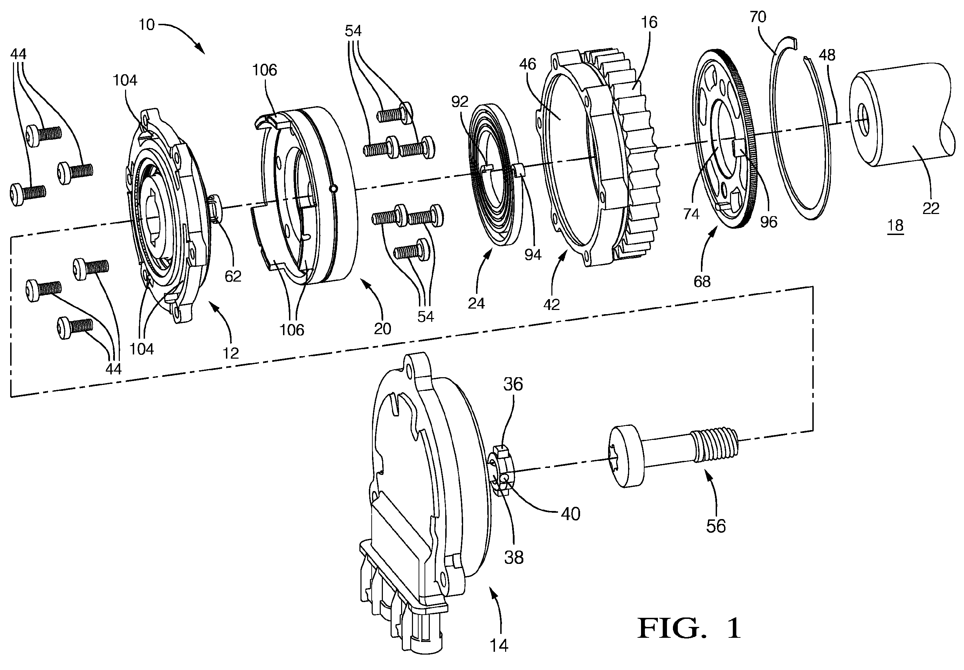

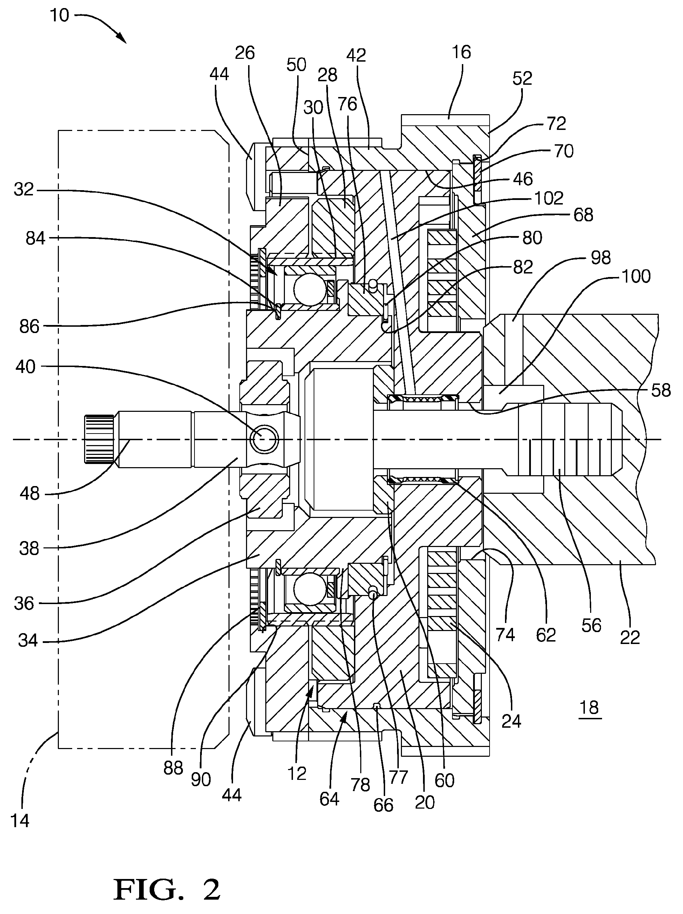

Referring to FIGS. 1 and 2, a camshaft phaser 10 in accordance with the present invention comprises a harmonic gear drive unit 12; a rotational actuator illustrated as electric motor 14 which is operationally connected to harmonic gear drive unit 12 and which may be a DC electric motor; an input sprocket 16 operationally connected to harmonic gear drive unit 12 and drivable by a crankshaft (not shown) of an internal combustion engine 18; an output hub 20 attached to harmonic gear drive unit 12 and mountable to an end of a camshaft 22 of internal combustion engine 18; and a bias spring 24 operationally disposed between output hub 20 and input sprocket 16.

Harmonic gear drive unit 12 comprises an outer first spline 26 which may be either a circular spline or a dynamic spline as described below; an outer second spline 28 which is the opposite (dynamic or circular) of outer first spline 26 and is coaxially positioned adjacent outer first spline 26; a flexspline 30 disposed radially inward of both outer first spline 26 and outer second spline 28 and having outwardly-extending gear teeth disposed for engaging inwardly-extending gear teeth on both outer first spline 26 and outer second spline 28; and a wave generator 32 disposed radially inwards of and engaging flexspline 30.

Flexspline 30 is a non-rigid ring with external teeth on a slightly smaller pitch diameter than the circular spline. Flexspline 30 is fitted over and elastically deflected by wave generator 32.

The circular spline (either outer first spline 26 or outer second spline 28) is a rigid ring with internal teeth engaging the teeth of flexspline 30 across the major axis of wave generator 32. The circular spline may serve as the input member.

The dynamic spline (whichever of outer first spline 26 and outer second spline 28 that is not the circular spline) is a rigid ring having internal teeth of the same number as flexspline 30. The dynamic spline rotates together with flexspline 30 and may serve as the output member. Either the dynamic spline or the circular spline may be identified by a chamfered corner at its outside diameter to distinguish the circular spline from the dynamic spline.

Wave generator 32 is an assembly of an elliptical steel disc supporting an elliptical bearing, the combination defining a wave generator plug. A flexible bearing retainer surrounds the elliptical bearing and engages flexspline 30. Rotation of the wave generator plug causes a rotational wave to be generated in flexspline 30 (actually two waves 180o apart, corresponding to opposite ends of the major ellipse axis of the disc).

During assembly of harmonic gear drive unit 12, the outwardly extending teeth of flexspline 30 engage the inwardly extending teeth of the circular spline and the dynamic spline along and near the major elliptical axis of wave generator 32. The dynamic spline has the same number of teeth as flexspline 30, so rotation of wave generator 32 causes no net rotation per revolution therebetween. However, the circular spline has slightly fewer gear teeth than does the dynamic spline, and therefore the circular spline rotates past the dynamic spline during rotation of the wave generator plug, defining a gear ratio therebetween (for example, a gear ratio of 50:1 would mean that 1 rotation of the circular spline past the dynamic spline corresponds to 50 rotations of the wave generator 32). Harmonic gear drive unit 12 is thus a high-ratio gear transmission; that is, the angular phase relationship between outer first spline 26 and outer second spline 28 changes by 2% for every revolution of wave generator 32.

Of course, as will be obvious to those skilled in the art, the circular spline rather may have slightly more teeth than the dynamic spline has, in which case the rotational relationships described below are reversed. Further features of harmonic gear drive unit 12 are described in United States Patent Application Publication No. US 2013/0081587 to David et al. which is incorporated herein by reference in its entirety.

Wave generator 32 includes a coupling adaptor 34 that is mounted thereto or formed integrally therewith. A coupling 36 is mounted to a motor shaft 38 of electric motor 14 and pinned thereto by a pin 40. Coupling 36 engages coupling adaptor 34, permitting wave generator 32 to be rotationally driven by electric motor 14, as may be desired to alter the phase relationship between outer first spline 26 and outer second spline 28.

Still referring to Figs. 1 and 2, input sprocket 16 is rotationally fixed to a generally cylindrical and hollow housing 42 that is fastened by bolts 44 to outer first spline 26. Housing 42, which acts as an input member, includes a housing bore 46 extending through housing 42 along a longitudinal axis 48 upon which camshaft 22 rotates. Housing bore 46 defines a first open end 50 of housing 42 which is proximal to electric motor 14 and a second open end 52 of housing 42 which is proximal to camshaft 22. Outer first spline 26 is coaxial with housing bore 46 and axially adjacent to housing 42 such that outer first spline 26 is located outside of housing bore 46 and serves to close housing bore 46 at first open end 50 by axially abutting housing 42.

Output hub 20, which acts as an output member for camshaft phaser 10, is fastened to outer second spline 28 by bolts 54 such that outer second spline 28 is located coaxially within housing 42 along with output hub 20. Output hub 20 may be secured to camshaft 22 by a camshaft phaser attachment bolt 56 extending through an output hub axial bore 58 extending axially through output hub 20, and capturing a thrust washer 60 and a filter 62 within output hub 20. Filter 62 is a band-type filter that may be a screen or mesh and may be made from any number of different materials that are known in the art of oil filtering. Radial run-out between housing 42 and output hub 20 is limited by a single journal bearing interface 64 between housing 42 (input hub) and output hub 20. Journal bearing interface 64 is lubricated by oil supplied to an oil groove 66 formed in either output hub 20 (shown) and/or in housing 42 (not shown). The supply of oil to oil groove 66 will be discussed in more detail later.

Output hub 20 is retained within housing 42 by being captured axially between harmonic gear drive unit 12 and a back plate 68 disposed within housing 42 and retained therein by a snap ring 70 disposed in an annular back plate snap ring groove 72 formed in housing 42. Back plate 68 includes a central back plate bore 74 extending axially therethrough to allow at least a portion of output hub 20 and/or camshaft 22 to extend through back plate 68.

Output hub 20 may support wave generator 32 with a bearing 76 which is fixed coaxially to output hub 20, for example, by a press fit and/or by a retaining ring 77 which fits within corresponding grooves in output hub 20 and bearing 76. Bearing 76 fits over a portion of wave generator 32 axially between an annular shoulder 78, formed on the outer circumference of wave generator 32, and a first wave generator snap ring 80 that is secured with a first wave generator snap ring groove 82 formed in the outer circumference of wave generator 32. Bearing 76 may be a press fit with wave generator 32. In this way, wave generator 32 is retained to output hub 20. It should be noted that the elliptical bearing of wave generator 32 fits over a portion of wave generator 32 axially between annular shoulder 78 and a second wave generator snap ring 84 that is secured within a second wave generator snap ring groove 86 formed in the outer circumference of wave generator 32. Flexspline 30 is retained by an outer first spline snap ring 88 that is secured within an outer first spline snap ring groove 90 formed on the inner circumference of outer first spline 26. In this way, flexspline 30 is captured axially between first spline snap ring 88 and output hub 20. Annular shoulder 78 may also act as a support to prevent axial deflection of a ball cage of wave generator 32.

Bias spring 24 is captured axially between output hub 20 and back plate 68. An inner spring tang 92 of bias spring 24 is engaged with output hub 20 while an outer spring tang 94 of bias spring 24 is engaged with back plate 68 by a pin 96 which is fixed to back plate 68. In the event of a malfunction of electric motor 14, bias spring 24 is biased to back-drive harmonic gear drive unit 12 without help from electric motor 14 to a predetermined rotational position of outer second spline 28. The predetermined position may be a position which allows internal combustion engine 18 to start or run, and the predetermined position may be at one of the extreme ends of the range of authority or intermediate of the phaser's extreme ends of its rotational range of authority. For example, the rotational range of travel in which bias spring 24 biases harmonic gear drive unit 12 may be limited to something short of the end stop position of the phaser's range of authority. Such an arrangement would be useful for internal combustion engines requiring an intermediate park position for idle or restart.

In order to lubricate various elements of camshaft phaser 10, oil is provided under pressure from internal combustion engine 18 through a radial camshaft drilling 98. Camshaft drilling 98 communicates with an annular passage 100 formed radially between camshaft phaser attachment bolt 56 and a bore formed in camshaft 22 and between camshaft phaser attachment bolt 56 and output hub axial bore 58. The oil is then filtered by passing radially through filter 62 to prevent contaminants that may be present in the oil from passing further into camshaft phaser 10. After passing through filter 62 the oil is then communicated to a tube 102 which extends generally radially outward from output hub axial bore 58 to oil groove 66 thereby allowing the oil to be communicated to oil groove 66 where the oil lubricates journal bearing interface 64. Journal bearing interface 64 allows oil to pass thereby in both an axial direction toward back plate 68 and an axial direction away from back plate 68. Oil that passes by journal bearing interface 64 in the axial direction away from back plate 68 is allowed to lubricate harmonic gear drive unit 12, bearing 76, and coupling 36 through gravity and dynamics of camshaft phaser 10 in use.

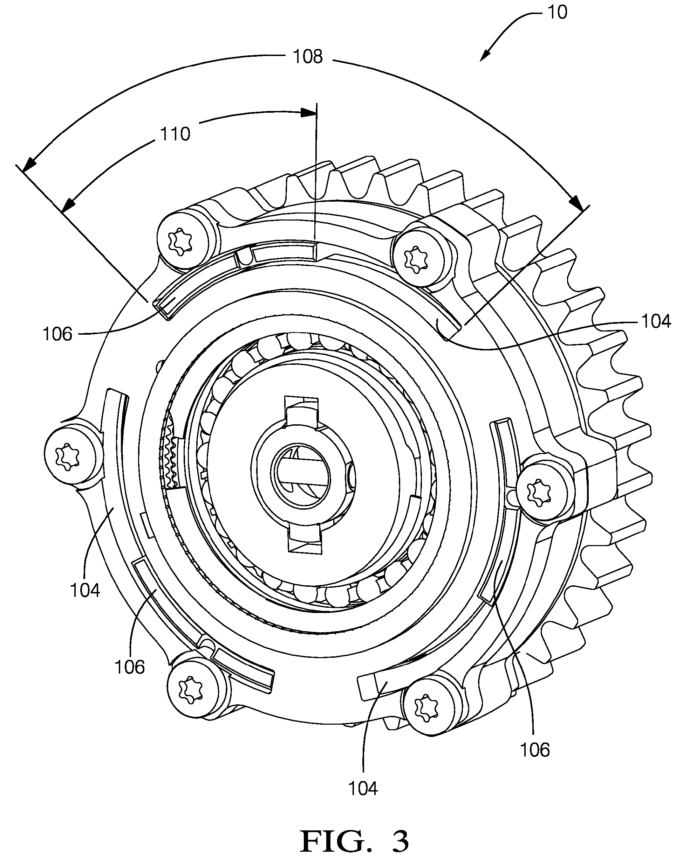

In addition to Figs. 1 and 2, reference will now be made to Fig. 3. In order to limit the amount of relative rotation between outer first spline 26 and outer second spline 28, thereby limiting amount of phasing between the crankshaft of internal combustion engine 18 and camshaft 22, outer first spline 26 includes slots 104 while output hub 20 includes corresponding stop members 106. As shown, each slot 104 may be arc-shaped and extend axially through outer first spline 26 such that each slot 104 has a slot arc length 108. Each slot 104 may be a constant radius that is centered about axis 48. Also as shown, each stop member 106 may be arc-shaped and extend axially from output hub 20 into a respective slot 104 such that each stop member 106 has a stop member arc length 110 that is less than slot arc length 108. Each stop member 106 may be a constant radius that is centered about axis 48. In this way, relative rotation between outer first spline 26 and outer second spline 28 causes each stop member 106 to move within its respective slot 104 to the extent that slot arc length 108 and stop member arc length 110 are designed to provide a desired magnitude of relative rotation between outer first spline 26 and outer second spline 28 which corresponds to the desired magnitude of phasing between the crankshaft of internal combustion engine 18 and camshaft 22. While three slots 104 and three stop members 106 have been shown, it should be understood that a lesser or greater number of each may be included.

By providing outer first spline 26 outside of housing 42 such that outer first spline 26 serves to close first open end 50 of housing 42, camshaft phaser 10 is more axially compact since housing 42 does not need to be made longer to accommodate outer first spline 26 therewithin.

In operation, when a change of phase is desired between the crankshaft of internal combustion engine 18 and camshaft 22, motor shaft 38 of electric motor 14 is rotated by applying an electric current to electric motor 14. It should be noted that motor shaft 38 may be rotated either clockwise or counterclockwise as determined by whether it is desired to advance or retard camshaft 22 relative to the crankshaft. Rotation of motor shaft 38 causes wave generator 32 to rotate which causes a rotational wave to be generated in flexspline 30, thereby causing outer first spline 26 to rotate relative to outer second spline 28. Since outer first spline 26 is fixed to housing 42 and outer second spline 28 is fixed to output hub 20, housing 42 also rotates relative to output hub 20, thereby changing the phase relationship between camshaft 22 and the crankshaft to the extent allowed by slots 104 and stop members 106.

While this invention has been described in terms of preferred embodiments thereof, it is not intended to be so limited, but rather only to the extent set forth in the claims that follow.

## Claims

1. A camshaft phaser (10) for controllably varying the phase relationship between a crankshaft and a camshaft (22) in an internal combustion engine (18), said camshaft phaser (10) comprising:
a housing (42) having a bore (46) with an open end (50) and extending along a longitudinal axis (48); and
a harmonic gear drive unit (12) comprising an outer first spline (26), an outer second spline (28) which is axially adjacent to said outer first spline (26) and disposed within said housing (42), a flexspline (30) disposed radially within said outer first spline (26) and said outer second spline (28), a wave generator (32) disposed radially within said flexspline (30), and a rotational actuator (14) connectable to said wave generator (32) such that rotation of said rotational actuator (14) causes relative rotation between said outer first spline (26) and said outer second spline (28), wherein said outer first spline (26) is fixed to said housing (42) in order to prevent relative rotation therebetween and serves to close said open end (50) of said housing (42),
the camshaft phaser (10) further comprising an output hub (20) rotatably disposed coaxially within said housing (42) axially adjacent to said harmonic gear drive unit (12) and attachable to said camshaft (22) and fixed to said outer second spline (28) in order to prevent relative rotation therebetween,
**characterized in that**
said output hub (20) includes a bearing (76) mounted coaxially therewith which radially supports said wave generator (32).

2. A camshaft phaser (10) as in claim 1 wherein said output hub (20) is radially supported by said bore (46), thereby defining a journal bearing interface (64) radially between said output hub (20) and said bore (46).

3. A camshaft phaser (10) as in claim 1 wherein said wave generator (32) includes a snap ring groove (82) with a snap ring (80) extending radially outward from said snap ring groove (82) and wherein said snap ring (80) is located axially between said output hub (20) and said bearing (76).

4. A camshaft phaser (10) according to any one of claims 1 to 3 wherein
said bearing (76) is located axially between said harmonic gear drive unit (12) and said output hub (20).

5. A camshaft phaser (10) according to any one of claims 1 to 4 wherein
said outer first spline (26) includes a slot (104) and wherein said output hub (20) includes a stop member (106) extending axially into said slot (104), thereby limiting the amount of relative rotation between said housing (42) and said output hub (20).

6. A camshaft phaser (10) as in claim 5wherein said slot (104) is arc-shaped and has a first arc length (108).

7. A camshaft phaser (10) as in claim 6 wherein said stop member (106) is arc-shaped and has a second arc length (110) that is less than said first arc length (108).

8. A camshaft phaser (10) according to any one of the preceding claims wherein said outer first spline (26) includes an outer first spline snap ring groove (90) and an outer first spline snap ring (88) extending radially inward from said outer first spline snap ring groove (90) to retain said flexspline (30).

9. A camshaft phaser (10) according to any one of claims 1 to 8 wherein
said outer first spline (26) includes an outer first spline snap ring groove (90) and an outer first spline snap ring (88) extending radially inward from said outer first spline snap ring groove (90) to retain said flexspline (30) axially between said output hub (20) and said outer first spline snap ring (88).

10. A camshaft phaser (10) according to any one of the preceding claims wherein said outer first spline (26) is located outside said housing (42).

11. A camshaft phaser (10) according to any one of the preceding claims wherein said outer first spline (26) axially abuts said housing (42).

## Patentansprüche

1. Ein Nockenwellenversteller (10) zum steuerbaren Variieren der Phasenbeziehung zwischen einer Kurbelwelle und einer Nockenwelle (22) in einem Verbrennungsmotor (18), wobei der Nockenwellenversteller (10) aufweist:
ein Gehäuse (42), das eine Bohrung (46) mit einem offenen Ende (50) hat und sich entlang einer Längsachse (48) erstreckt; und
eine "harmonisches Getriebe"-Antriebseinheit (12), die eine äußere erste Spline (26), eine äußere zweite Spline (28), die axial angrenzend zu der äußeren ersten Spline (26) ist und in dem Gehäuse (42) angeordnet ist, eine Flexspline (30), die radial in der äußeren ersten Spline (26) und der äußeren zweiten Spline (28) angeordnet ist, einen Wellengenerator (32), der radial in der Flexspline (30) angeordnet ist, und einen Rotationsaktuator (14) aufweist, der mit dem Wellengenerator (32) verbindbar ist derart, dass eine Rotation des Rotationsaktuators (14) eine relative Rotation zwischen der äußeren ersten Spline (26) und der äußeren zweiten Spline (28) veranlasst, wobei die äußere erste Spline (26) an dem Gehäuse (42) befestigt ist, um eine relative Rotation dazwischen zu verhindern, und dient dazu, das offene Ende (50) des Gehäuses (42) zu schließen,
wobei der Nockenwellenversteller (10) weiter eine Ausgangsnabe (20) aufweist,
die rotierbar koaxial in dem Gehäuse (42) axial angrenzend an die "harmonisches Getriebe"-Antriebseinheit (12) angeordnet ist und an der Nockenwelle (22) anbringbar ist und an der äußeren zweiten Spline (28) befestigt ist, um eine relative Rotation dazwischen zu verhindern,
**dadurch gekennzeichnet, dass**
die Ausgangsnabe (20) ein Lager (76) hat, das mit dieser koaxial angebracht ist, das den Wellengenerator (32) radial führt.

2. Ein Nockenwellenversteller (10) gemäß Anspruch 1, wobei die Ausgangsnabe (20) radial von der Bohrung (46) geführt wird, wodurch eine Wellenlagerschnittstelle (64) radial zwischen der Ausgangsnabe (20) und der Bohrung (46) definiert wird.

3. Ein Nockenwellenversteller (10) gemäß Anspruch 1, wobei der Wellengenerator (32) eine Ringnut (82) mit einem Sprengring (80) umfasst, der sich radial nach außen von der Ringnut (82) erstreckt, und wobei sich der Sprengring (80) axial zwischen der Ausgangsnabe (20) und dem Lager (76) befindet.

4. Ein Nockenwellenversteller (10) gemäß einem der Ansprüche 1 bis 3, wobei sich das Lager (76) axial zwischen der "harmonisches Getriebe"-Antriebseinheit (12) und der Ausgangsnabe (20) befindet.

5. Ein Nockenwellenversteller (10) gemäß einem der Ansprüche 1 bis 4, wobei
die äußere erste Spline (26) einen Schlitz (104) umfasst und wobei die Ausgangsnabe (20) ein Anschlagselement (106) umfasst, das sich axial in den Schlitz (104) erstreckt, wodurch der Umfang einer relativen Rotation zwischen dem Gehäuse (42) und der Ausgangsnabe (20) begrenzt wird.

6. Ein Nockenwellenversteller (10) gemäß Anspruch 5, wobei der Schlitz (104) bogenförmig ist und eine erste Bogenlänge (108) hat.

7. Ein Nockenwellenversteller (10) gemäß Anspruch 6, wobei das Anschlagselement (106) bogenförmig ist und eine zweite Bogenlänge (110) hat, die kleiner ist als die erste Bogenlänge (108).

8. Ein Nockenwellenversteller (10) gemäß einem der vorhergehenden Ansprüche, wobei die äußere erste Spline (26) eine Ringnut (90) der äußeren ersten Spline umfasst und sich ein Sprengring (88) der äußeren ersten Spline radial nach innen von der Ringnut (90) der äußeren ersten Spline erstreckt, um die Flexspline (30) zu halten.

9. Ein Nockenwellenversteller (10) gemäß einem der Ansprüche 1 bis 8, wobei die äußere erste Spline (26) eine Ringnut (90) der äußeren ersten Spline umfasst und sich ein Sprengring (88) der äußeren ersten Spline radial nach innen von der Ringnut (90) der äußeren ersten Spline erstreckt, um die Flexspline (30) axial zwischen der Ausgangsnabe (20) und dem Sprengring (88) der äußeren ersten Spline zu halten.

10. Ein Nockenwellenversteller (10) gemäß einem der vorhergehenden Ansprüche, wobei sich die äußere erste Spline (26) außerhalb des Gehäuses (42) befindet.

11. Ein Nockenwellenversteller (10) gemäß einem der vorhergehenden Ansprüche, wobei die äußere erste Spline (26) axial an dem Gehäuse (42) anliegt.

## Revendications

1. Déphaseur d'arbre à cames (10) pour faire varier de manière contrôlée la relation de phase entre un vilebrequin et un arbre à cames (22) dans un moteur à combustion interne (18), ledit déphaseur d'arbre à cames (10) comprenant :
un boîtier (42) ayant un perçage (46) avec une extrémité ouverte (50) et s'étendant le long d'un axe longitudinal (48) ; et
une unité d'entraînement à engrenages harmoniques (12) comprenant une première cannelure extérieure (26), une seconde cannelure extérieure (28) qui est axialement adjacente à ladite première cannelure extérieure (26) et disposée à l'intérieur dudit boîtier (42), une cannelure flexible (30) disposée radialement à l'intérieur de ladite première cannelure extérieure (26) et de ladite seconde cannelure extérieure (28), un générateur d'onde (32) disposé radialement à l'intérieur de ladite cannelure flexible (30), et un actionneur rotatif (14) susceptible d'être connecté audit générateur d'onde (32) de sorte qu'une rotation dudit actionneur rotatif (14) entraîne une rotation relative entre ladite première cannelure extérieure (26) et ladite seconde cannelure extérieure (28), dans lequel ladite première cannelure extérieure (26) est fixée audit boîtier (42) afin de d'empêcher une rotation relative entre eux et sert à fermer ladite extrémité ouverte (50) dudit boîtier (42),
le déphaseur d'arbre à cames (10) comprenant en outre un moyeu de sortie (20) disposé en rotation coaxialement à l'intérieur dudit boîtier (42), axialement adjacent à ladite unité d'entraînement à engrenages harmoniques (12) et susceptible d'être attaché audit arbre à cames (22), et fixé à ladite seconde cannelure extérieure (28) afin d'empêcher une rotation relative entre eux,
**caractérisé en ce que**
ledit moyeu de sortie (20) inclut un palier (76) monté coaxialement avec celui-ci, qui supporte radialement ledit générateur d'onde (32).

2. Déphaseur d'arbre à cames (10) selon la revendication 1, dans lequel
ledit moyeu de sortie (20) est supporté radialement par ledit perçage (46) définissant ainsi une interface a palier lisse (64) radialement entre ledit moyeu de sortie (20) et ledit perçage (46).

3. Déphaseur d'arbre à cames (10) selon la revendication 1, dans lequel
ledit générateur d'onde (32) inclut une gorge pour jonc élastique (82) avec un jonc élastique (80) s'étendant radialement vers l'extérieur depuis ladite gorge pour jonc élastique (82), et dans lequel ledit jonc élastique (80) est situé axialement entre ledit moyeu de sortie (20) et ledit palier (76).

4. Déphaseur d'arbre à cames (10) selon l'une quelconque des revendications 1 à 3, dans lequel ledit palier (76) est situé axialement entre ladite unité d'entraînement à engrenages harmoniques (12) et ledit moyeu de sortie (20).

5. Déphaseur d'arbre à cames (10) selon l'une quelconque des revendications 1 à 4, dans lequel ladite première cannelure extérieure (26) inclut une fente (104), et dans lequel ledit moyeu de sortie (20) inclut un élément d'arrêt (106) s'étendant axialement jusque dans ladite fente (104), en limitant ainsi l'amplitude de rotation relative entre ledit boîtier (42) et ledit moyeu de sortie (20).

6. Déphaseur d'arbre à cames (10) selon la revendication 5, dans lequel ladite fente (104) est en forme d'arc et présente une première longueur d'arc (108).

7. Déphaseur d'arbre à cames (10) selon la revendication 6, dans lequel
ledit élément d'arrêt (106) est en forme d'arc et présente une seconde longueur d'arc (110) qui est inférieure à ladite première longueur d'arc (108).

8. Déphaseur d'arbre à cames (10) selon l'une quelconque des revendications précédentes, dans lequel ladite première cannelure extérieure (26) inclut une gorge pour jonc élastique (90) dans la première cannelure extérieure et un jonc élastique (88) de première cannelure extérieure s'étendant radialement vers l'intérieur depuis ladite gorge pour jonc élastique (90) dans la première cannelure extérieure afin de retenir ladite cannelure flexible (30).

9. Déphaseur d'arbre à cames (10) selon l'une quelconque des revendications 1 à 8, dans lequel ladite première cannelure extérieure (26) inclut une gorge pour jonc élastique (90) dans la première cannelure extérieure et un jonc élastique de première cannelure extérieure (88) s'étendant radialement vers l'intérieur depuis ladite gorge pour jonc élastique (90) dans la première cannelure extérieure afin de retenir ladite cannelure flexible (30) axialement entre le moyeu de sortie (20) et ledit jonc élastique de première cannelure extérieure (88).

10. Déphaseur d'arbre à cames (10) selon l'une quelconque des revendications précédentes, dans lequel ladite première cannelure extérieure (26) est située à l'extérieur dudit boîtier (42).

11. Déphaseur d'arbre à cames (10) selon l'une quelconque des revendications précédentes, dans lequel ladite première cannelure extérieure (26) vient buter axialement contre ledit boîtier (42).
